# EUROPEAN PATENT APPLICATION

(11) **EP 3 943 301 A2**
(43) Date of publication of application: **26.01.2022**
(21) Application number: 21175339.7
(22) Date of filing: 21.05.2021
(51) Int. Cl.: B32B 38/18

(54) **ATTACHING DEVICE AND CURVED-SURFACE ATTACHING INTERMEDIARY**

(30) Priority: 24.07.2020 US 202063056117 P; 20.11.2020 TW 109140747
(71) Applicant: Mirle Automation Corporation, Hsinchu 30076 (TW)
(72) Inventor: LIN, HUNG-PIN, 30076 HSINCHU (TW); CHEN, SHIH-CHUN, 30076 HSINCHU (TW); LEE, YEN-DAO, 30076 HSINCHU (TW)
(74) Representative: DREISS Patentanwälte PartG mbB

(57) **Abstract**

An attaching device (100) and a curved-surface attaching intermediary (6) are provided. The curved-surface attaching intermediary (6) includes a frame (61), two buffering assemblies (63) movably assembled to the frame (61), and a flexible sheet (62) that is assembled to the two buffering assemblies (63). The flexible sheet (62) includes a bonding region (621) and two fixing regions (622) that are respectively located at two opposite sides of the bonding region (621). The bonding region (621) is configured to adhere with an attaching object (200), and the two fixing regions (622) are respectively fixed to the two buffering assemblies (63). When the flexible sheet (62) is compressed to increase a tension value thereof to reach a predetermined starting value, the two fixing regions (622) are moved toward the bonding region (621) by a same amount of displacement through the two buffering assemblies (63).

## Description

### FIELD OF THE DISCLOSURE

The present disclosure relates to an attaching device, and more particularly to an attaching device and a curved-surface attaching intermediary for a curved-surface attaching process.

### BACKGROUND OF THE DISCLOSURE

A conventional attaching device includes a carrying platform and a pressing mechanism, and is used to fix an attaching object onto an attached object by moving the pressing mechanism. However, since diverse types of attachment have been developed over the years, the structural design of the conventional attaching device can no longer meet current requirements for attachment.

### SUMMARY OF THE DISCLOSURE

In response to the above-referenced technical inadequacy, the present disclosure provides an attaching device and a curved-surface attaching intermediary to effectively improve on the issues associated with conventional attaching devices.

In one aspect, the present disclosure provides an attaching device, which includes a carrying mechanism, a pressing mechanism, and a curved-surface attaching intermediary. The carrying mechanism includes a carrying surface configured to hold an attached object. The pressing mechanism corresponds in position to the carrying mechanism. The pressing mechanism has a filled space, a filling opening being in spatial communication with the filled space, and a pressing member that defines at least part of the filled space. The pressing mechanism and the carrying mechanism are movable relative to each other, and the pressing mechanism is configured to fill a fluid into the filled space through the filling opening, so that the filled space expands to deform the pressing member. The curved-surface attaching intermediary is selectively disposed between the carrying surface and the pressing member. The curved-surface attaching intermediary includes a frame, two buffering assemblies movably assembled to the frame, and a flexible sheet. The flexible sheet includes a bonding region and two fixing regions that are respectively located at two opposite sides of the bonding region. The bonding region faces toward the carrying surface and is configured to adhere with an attaching object, and the two fixing regions are respectively fixed to the two buffering assemblies. When the attaching device is operated to implement an attaching process after the attached object is held by the carrying surface and the attaching object is adhered to the flexible sheet, a curved surface of the attached object and the pressing member that is deformed by the filled space jointly clamp and press against the flexible sheet and the attaching object, so that the attaching object is deformed and adhered onto the curved surface) of the attached object. When the flexible sheet is compressed to increase a tension value thereof to reach a predetermined starting value, the two fixing regions are moved toward the bonding region by a same amount of displacement through the two buffering assemblies.

In another aspect, the present disclosure provides a curved-surface attaching intermediary, which includes a frame, two buffering assemblies movably assembled to the frame, and a flexible sheet. The flexible sheet includes a bonding region and two fixing regions that are respectively located at two opposite sides of the bonding region. The bonding region is configured to adhere with an attaching object, and the two fixing regions are respectively fixed to the two buffering assemblies. When the flexible sheet is compressed to increase a tension value thereof to reach a predetermined starting value, the two fixing regions are moved toward the bonding region by a same amount of displacement through the two buffering assemblies.

Therefore, in the curved-surface attaching intermediary of the attaching device of the present disclosure, any one of the two fixing regions of the flexible sheet can be moved by the amount of displacement, thereby avoiding damaging the flexible sheet when the flexible sheet is stretched beyond the tension value of the tension threshold value. Moreover, the two fixing regions of the flexible sheet can be moved by the same amount of displacement, so that the attaching object adhered to the bonding region can be adhered onto the attached object without a position offset for achieving a precisely attaching effect.

These and other aspects of the present disclosure will become apparent from the following description of the embodiment taken in conjunction with the following drawings and their captions, although variations and modifications therein may be affected without departing from the scope of the novel concepts of the disclosure.

### BRIEF DESCRIPTION OF THE DRAWINGS

The described embodiments may be better understood by reference to the following description and the accompanying drawings in which:
FIG. 1 is a schematic view showing an attaching device at an open position according to a first embodiment of the present disclosure;
FIG. 2 is a schematic view showing the attaching device at a sealed position according to the first embodiment of the present disclosure;
FIG. 3 is a schematic top view of a curved-surface attaching intermediary according to the first embodiment of the present disclosure;
FIG. 4 is a schematic side view of FIG. 3;
FIG. 5 is a schematic top view showing the curved-surface attaching intermediary of FIG. 3 in an operation state according to the first embodiment of the present disclosure;
FIG. 6 is a schematic side view of FIG. 5;
FIG. 7A is a schematic view showing the attaching device of FIG. 2 used to implement an attaching process in a first manner;
FIG. 7B is a schematic view showing the attaching device of FIG. 2 used to implement the attaching process in a second manner;
FIG. 8 is a schematic view showing the attaching device moving an attaching object to attach onto an attached object according to the first embodiment of the present disclosure;
FIG. 9 is a schematic top view of a curved-surface attaching intermediary according to a second embodiment of the present disclosure; and
FIG. 10 is a schematic top view showing the curved-surface attaching intermediary of FIG. 9 in an operation state according to the second embodiment of the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

### [First Embodiment]

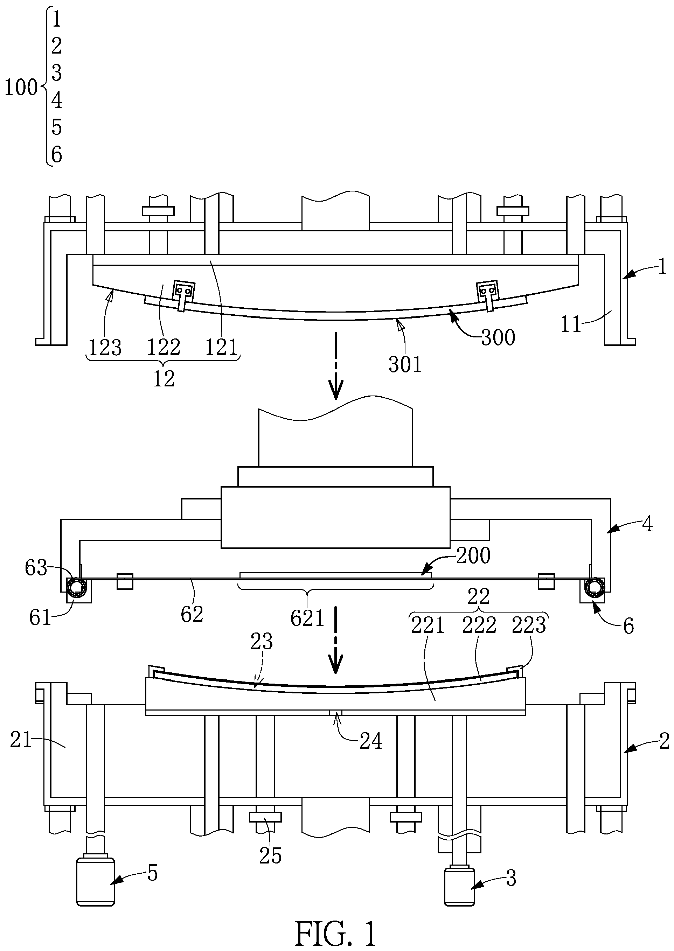

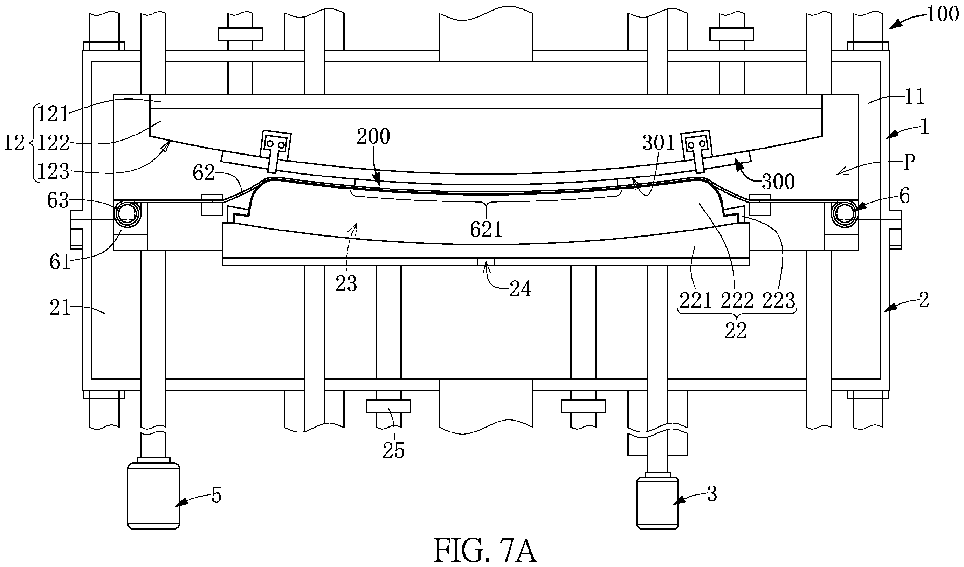

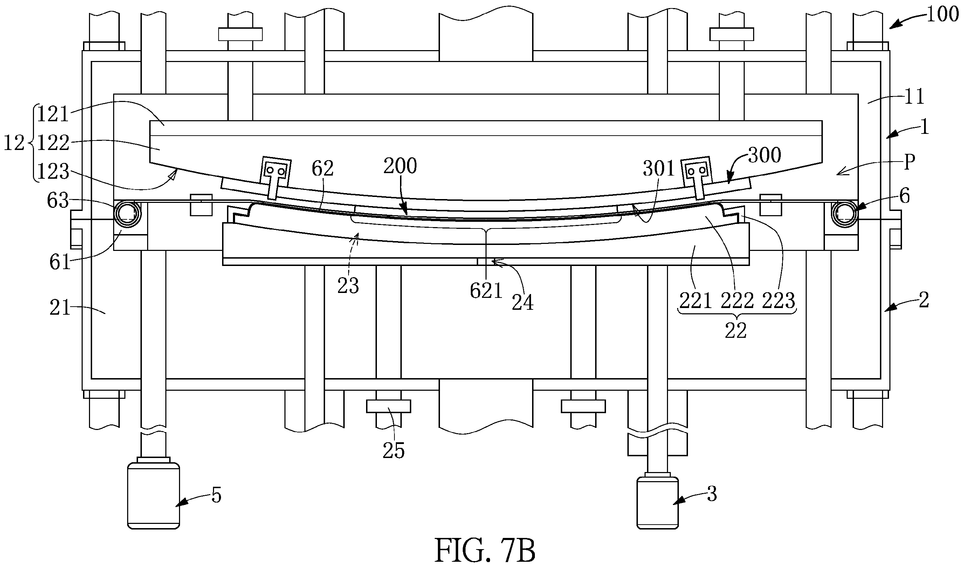

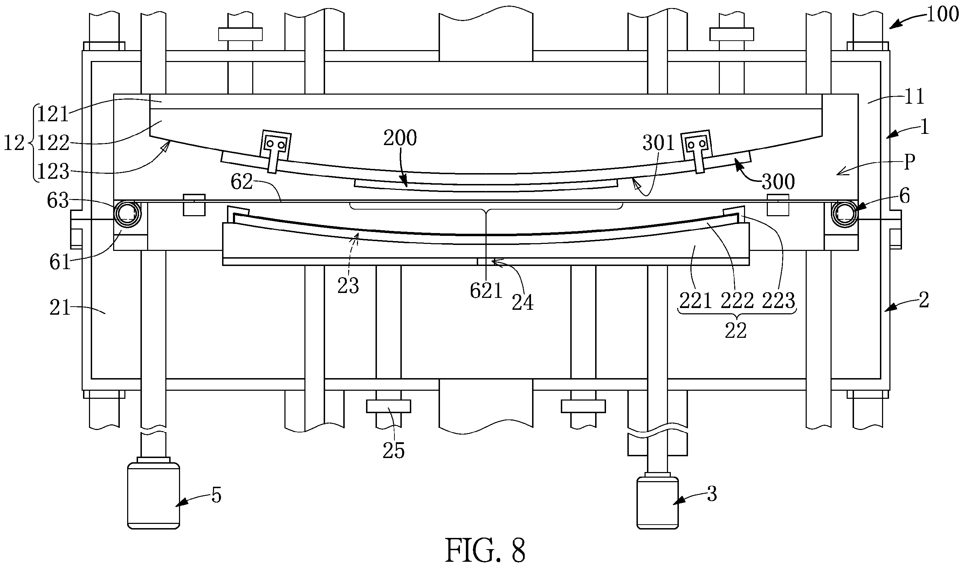

Referring to FIG. 1 to FIG. 8, a first embodiment of the present disclosure provides an attaching device 100 configured to attach an attaching object 200 onto an attached object 300. The attached object 300 has a curved surface 301 that can be adjusted or changed according to design requirements (e.g., a convex surface or a concave surface). In the present embodiment, the attached object 300 can be a curved glass (e.g., a C-shaped glass or a U-shaped glass), and the attaching object 200 can be a display, but the present disclosure is not limited thereto.

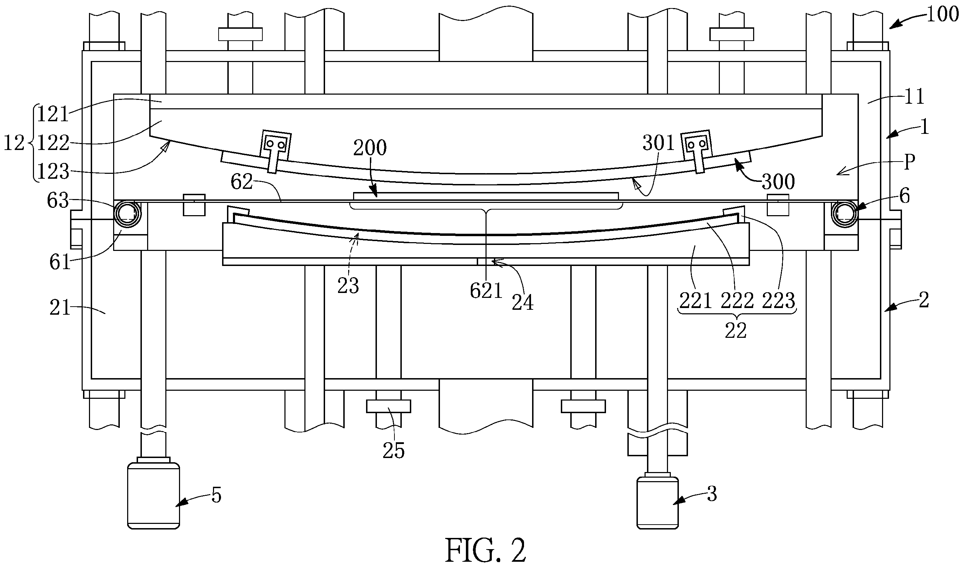

As shown in FIG. 1 and FIG. 2, the attaching device 100 in the present embodiment includes a carrying mechanism 1, a pressing mechanism 2 corresponding in position to the carrying mechanism 1, a filling mechanism 3 connected to the pressing mechanism 2, a transferring mechanism 4 disposed outside of the carrying mechanism 1 and the pressing mechanism 2, a suction mechanism 5 connected to the carrying mechanism 1 and/or the pressing mechanism 2, and a curved-surface attaching intermediary 6 that is selectively disposed between the carrying mechanism 1 and the pressing mechanism 2. Moreover, the pressing mechanism 2 and the carrying mechanism 1 are movable relative to each other.

It should be noted that the attaching device 100 in the present embodiment includes the above components, but the components can be added or omitted according to design requirements. For example, in other embodiments of the present disclosure, at least one of the suction mechanism 5, the filling mechanism 3, and the transferring mechanism 4 can be omitted; or, the position of the carrying mechanism 1 and the position of the pressing mechanism 2 can be exchanged. The following description describes the structure and connection relationship of the components of the attaching device 100.

As shown in FIG. 1, the carrying mechanism 1 includes a first chamber 11 and a carrying platform 12 that is arranged in the first chamber 11. The carrying platform 12 includes a carrying surface 123 configured to hold the attached object 300 thereupon (e.g., the attached object 300 can be fixed on the carrying surface 123 by a vacuum absorption, an adhesive manner, or an engagement manner). Moreover, the carrying surface 123 can be coated with a lubricating layer for preventing the attached object 300 from being scratched. In the present embodiment, the carrying surface 123 is a curved surface corresponding in shape to the attached object 300. Specifically, the carrying platform 12 can include a platform 121 and a mold 122 that is detachably assembled to the platform 121, and the mold 122 is formed with the carrying surface 123. Accordingly, the mold 122 can be changed according to the shape of the attached object 300.

As shown in FIG. 1, the pressing mechanism 2 in the present embodiment includes a second chamber 21, a pressing member 22 disposed in the second chamber 21, and a lifting assembly 25. The lifting assembly 25 is assembled to the second chamber 21 and is connected to the pressing member 22. The pressing mechanism 2 has a filled space 23 and a filling opening 24 that is in spatial communication with the filled space 23. The filled space 23 and the filling opening 24 are arranged in the second chamber 21. Moreover, the filled space 23 of the pressing mechanism 2 in the present embodiment is formed in the pressing member 22, but the present disclosure is not limited thereto. For example, in other embodiments of the present disclosure, the filled space 23 can be jointly defined by the pressing member 22 and other components. In other words, the pressing member 22 defines at least part of the filled space 23.

Specifically, the pressing member 22 in the present embodiment includes a seat 221 fixed to the lifting assembly 25, a bag 222 disposed on the seat 221, and a fixing frame 223 that fixes the bag 222 onto the seat 221. An interior space of the bag 222 is defined as the filled space 23, the seat 221 is formed with the filling opening 24, and the fixing frame 223 presses and fixes a peripheral portion of the bag 222 onto the seat 221, so that the bag 222 (or the filled space 23) can be expanded to a predetermined shape. However, in other embodiments of the present disclosure, the structure of the pressing member 22 can be adjusted or changed according to design requirements.

Moreover, the filling mechanism 3 is arranged outside of the carrying mechanism 1 and the pressing mechanism 2, and the filling mechanism 3 is connected to the filling opening 24 of the pressing mechanism 2. Accordingly, the filling mechanism 3 is configured to selectively fill a fluid (e.g., gas or liquid) into the filled space 23 through the filling opening 24, so that the filled space 23 and/or the pressing member 22 can be gradually expanded. In other words, the pressing mechanism 2 can be configured to fill the fluid into the filled space 23 through the filling opening 24 (by the filling mechanism 3), so that the filled space 23 expands to deform the pressing member 22.

Specifically, the pressing mechanism 2 and the carrying mechanism 1 are movable relative to each other between an open position (as shown in FIG. 1) and a sealed position (as shown in FIG. 2). In other words, at least one of the pressing mechanism 2 and the carrying mechanism 1 can be moved according to practical requirements.

As shown in FIG. 1, when the pressing mechanism 2 and the carrying mechanism 1 are at the open position, the first chamber 11 and the second chamber 21 are spaced apart from each other, so that the curved-surface attaching intermediary 6 can be selectively moved into or out of a space between the pressing mechanism 2 (e.g., the pressing member 22) and the carrying mechanism 1 (e.g., the carrying surface 123). In the present embodiment, the transferring mechanism 4 (e.g., a robotic arm, a suction nozzle, or a magnetic attractor) is configured to hold and transfer the curved-surface attaching intermediary 6 so as to allow the curved-surface attaching intermediary 6 to be located between or outside of the pressing member 22 and the carrying surface 123.

As shown in FIG. 2, when the pressing mechanism 2 and the carrying mechanism 1 are at the sealed position, the first chamber 11 and the second chamber 21 jointly define a work space P, the curved-surface attaching intermediary 6 is arranged in the work space P, and the pressing member 22 can be moved toward or away from the carrying platform 12 through the lifting assembly 25.

The suction mechanism 5 in the present embodiment is connected to the second chamber 21 of the pressing mechanism 2, and when the pressing mechanism 2 and the carrying mechanism 1 are at the sealed position, the suction mechanism 5 is configured to suction away air in the work space P so as to allow the work space P to be in a vacuum state, but the present disclosure is not limited thereto. For example, in other embodiments of the present disclosure, the suction mechanism 5 can be connected to the first chamber 11 of the carrying mechanism 1. Accordingly, the suction mechanism 5 in the present embodiment can be connected to at least one of the pressing mechanism 2 and the carrying mechanism 1.

It should be noted that the curved-surface attaching intermediary 6 in the present embodiment is described in cooperation with the above components, but the present disclosure is not limited thereto. For example, in other embodiments of the present disclosure, the curved-surface attaching intermediary 6 can be independently used (e.g., sold) or can be used in cooperation with other components.

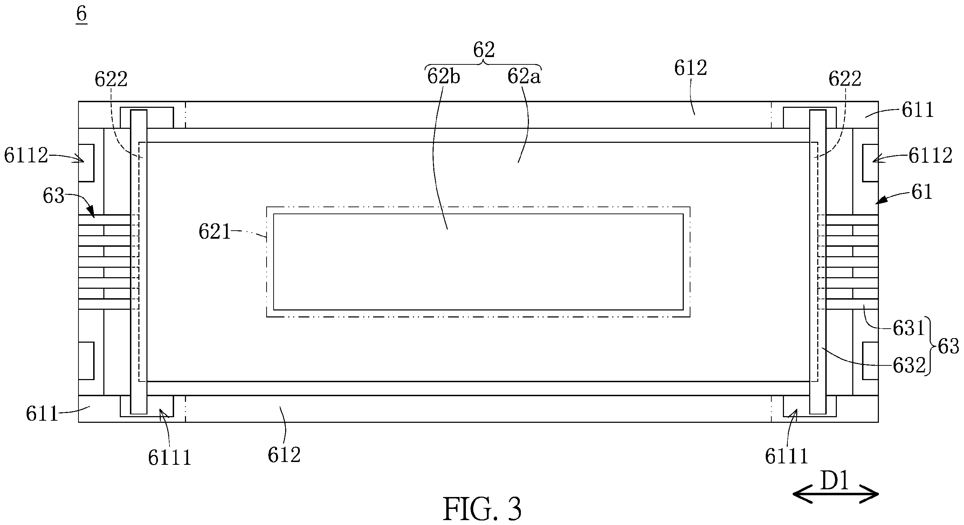

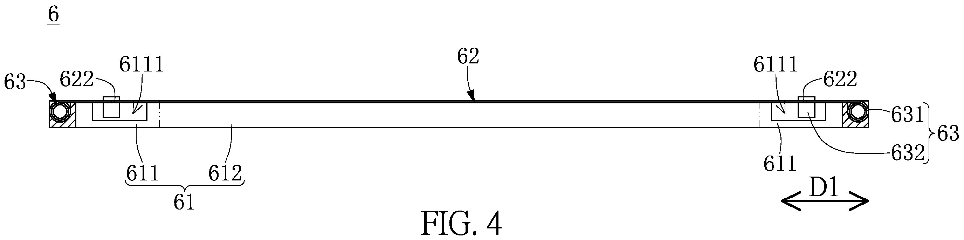

As shown in FIG. 3 and FIG. 4, the curved-surface attaching intermediary 6 includes a frame 61, two buffering assemblies 63 movably assembled to the frame 61, and a flexible sheet 62 that is assembled to the two buffering assemblies 63. The frame 61 in the present embodiment is in a rectangular shape and includes two end portions 611 respectively arranged on two opposite ends thereof (e.g., short edge portions of the rectangular shape), and two long lateral portions 612 that are respectively arranged on another two opposite ends thereof (e.g., long edge portions of the rectangular shape). In order to clearly describe the present embodiment, a longitudinal direction of any one of the two long lateral portions 612 is defined as a first direction D1. Moreover, each of the two end portions 611 is substantially in a U-shape, and two distal ends of each of the two end portions 611 are respectively connected to the two long lateral portions 612.

Specifically, the frame 61 has a plurality of guiding rails 6111. In the present embodiment, a quantity of the guiding rails 6111 is four, and the four guiding rails 6111 are respectively formed in four corner portions of the frame 61. In other words, each of the two end portions 611 is formed with two of the guiding rails 6111 that are respectively located adjacent to the two long lateral portions 612, and a longitudinal direction of each of the guiding rails 6111 is parallel to the first direction D1, but the present disclosure is not limited thereto.

Moreover, the frame 61 has a plurality of catch regions 6112 respectively formed on the two end portions 611, and the catch regions 6112 correspond in structure to the transferring mechanism 4, so that the transferring mechanism 4 can hold and move the curved-surface attaching intermediary 6 by holding the catch regions 6112. For example, if the transferring mechanism 4 is a robotic arm, the catch regions 6112 are notches for being clamped by the robotic arm; or, if the transferring mechanism 4 is a magnetic attractor, the catch regions 6112 are magnetic members for being attracted by the magnetic attractor.

The flexible sheet 62 includes a bonding region 621 and two fixing regions 622 that are respectively located at two opposite sides of the bonding region 621. The flexible sheet 62 in the present embodiment is in a rectangular shape, and the two fixing regions 622 respectively correspond in position to two short edges of the flexible sheet 62 (i.e., the two fixing regions 622 are spaced apart from each other along the first direction D1), and the bonding region 621 is arranged on a center portion of the flexible sheet 62 (i.e., the bonding region 621 is spaced apart from each of the two fixing regions 622 by a same distance), but the present disclosure is not limited thereto. For example, in other embodiments of the present disclosure, the bonding region 621 can be arranged close to one of the two fixing regions 622.

Moreover, the two fixing regions 622 of the flexible sheet 62 are respectively fixed to the two buffering assemblies 63, the bonding region 621 is spaced apart from each of the two buffering assemblies 63 by a same distance, and the flexible sheet 62 is preferably spaced apart from the two long lateral portions 612 of the frame 61. As shown in FIG. 1, the bonding region 621 is configured to adhere with the attaching object 200, and when the curved-surface attaching intermediary 6 is arranged in the work space P, the bonding region 621 faces toward the carrying surface 123, so that the attaching object 200 can face toward the carrying surface 123 or the attached object 300 held thereon.

Specifically, as shown in FIG. 3 and FIG. 4, the flexible sheet 62 in the present embodiment is a dual-film structure, which includes a bottom film 62a and a bonding film 62b. The two fixing regions 622 are arranged on the bottom film 62a, the bonding region 621 is arranged on the bonding film 62b, and a coefficient of elasticity of the bonding film 62b is less than that of the bottom film 62a. The bonding film 62b in the present embodiment is stacked onto a center portion of the bottom film 62a, but the present disclosure is not limited thereto. For example, in other embodiments of the present disclosure, the flexible sheet 62 can be a single film structure.

It should be noted that the two buffering assemblies 63 in the present embodiment are of the same structure and are in a symmetrical arrangement with respect to the frame 61, but the present disclosure is not limited thereto. For example, in other embodiments of the present disclosure, the two buffering assemblies 63 can be of different structure.

Any one of the two buffering assemblies 63 includes an elastic member 631 and a positioning member 632 that is movably disposed on the frame 61. In the present embodiment, the elastic member 631 is a spring, and the positioning member 632 is a rod, but the present disclosure is not limited thereto. For example, in other embodiments of the present disclosure, the elastic member 631 can be a component with a resilient material (e.g., rubber); or, the elastic member 631 and the positioning member 632 can be integrally formed as a single one-piece structure.

Specifically, as shown in FIG. 3 to FIG. 6, one end of the two elastic members 631 is fixed to the frame 61 (e.g., the two end portions 611), and another end of the two elastic members 631 is fixed to the two positioning members 632. Moreover, the positioning members 632 of the two buffering assemblies 63 are movably disposed on the guiding rails 6111, and the two fixing regions 622 are respectively fixed to the positioning members 632 of the two buffering assemblies 63, so that the two positioning members 632 are elastically movable along the guiding rails 6111 relative to the frame 61 through the two elastic members 631, but the present disclosure is not limited thereto. For example, in other embodiments of the present disclosure, the guiding rails 6111 of the frame 61 can be omitted, the positioning member 632 of any one of the two buffering assemblies 63 can be omitted, and any one of the two elastic members 631 is directly fixed to one of the two fixing regions 622.

In addition, the curved-surface attaching intermediary 6 can be held by at least one of the pressing mechanism 2 and the carrying mechanism 1 through the frame 61, but the connection structure between the curved-surface attaching intermediary 6 and at least one of the pressing mechanism 2 and the carrying mechanism 1 can be adjusted or changed according to design requirements and is not limited to the present embodiment.

As shown in FIG. 2 and FIG. 7A to FIG. 8, when the attaching device 100 is operated to implement an attaching process after the attached object 300 is held by the carrying surface 123 and the attaching object 200 is adhered to the flexible sheet 62, the curved surface 301 of the attached object 300 and the pressing member 22 that is deformed by the filled space 23 jointly clamp and press against the flexible sheet 62 and the attaching object 200, so that the attaching object 200 is deformed and adhered onto the curved surface 301 of the attached object 300. It should be noted that the attaching process in the present embodiment can be implemented by selecting one of the following two manners according to practical requirements.

As shown in FIG. 2, FIG. 7A, and FIG. 8, when the attaching process is implemented in a first manner, the pressing mechanism 2 is configured to gradually expand the filled space 23 toward the flexible sheet 62 so as to allow the pressing member 22 to gradually press against the flexible sheet 62, thereby gradually deforming the flexible sheet 62 toward the carrying surface 123 to deform and adhere the attaching object 200 onto the curved surface 301 of the attached object 300.

As shown in FIG. 2, FIG. 7B, and FIG. 8, when the attaching process is implemented in a second manner, the carrying mechanism 1 is configured to allow the attached object 300 held by the carrying surface 123 to be moved toward and abutted against the flexible sheet 62 (by using a component that can lift the carrying platform 12) so as to cause the attaching object 200 and the flexible sheet 62 to gradually press against the pressing member 22 that is deformed by the filled space 23, thereby deforming and adhering the attaching object 200 onto the curved surface 301 of the attached object 300.

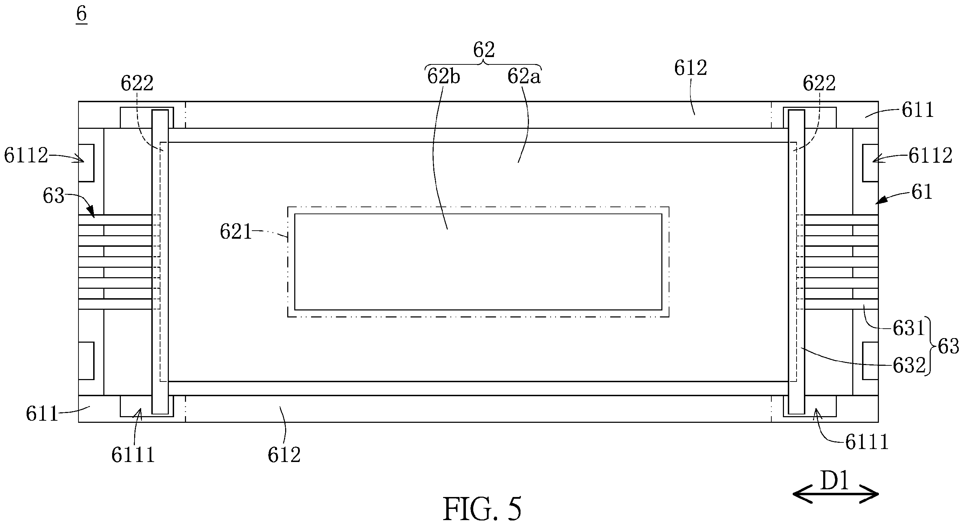

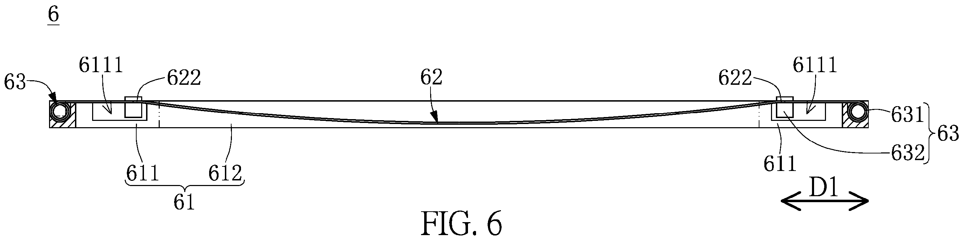

Specifically, as shown in FIG. 5 and FIG. 6, when the flexible sheet 62 is compressed to increase a tension value thereof to reach a predetermined starting value, the two fixing regions 622 are moved toward the bonding region 621 by a same amount of displacement through the two buffering assemblies 63 (as shown in FIG. 6). Moreover, the predetermined starting value is less than a tension threshold value where the flexible sheet 62 (e.g., the bottom film 62a) ruptures or is elastically fatigued. In the present embodiment, when the flexible sheet 62 is compressed to increase the tension value thereof to reach the predetermined starting value, the positioning members 632 of the two buffering assemblies 63 are moved along the guiding rails 6111 relative to the frame 61 by the same amount of displacement.

Accordingly, any one of the two fixing regions 622 of the flexible sheet 62 can be moved by the amount of displacement, thereby avoiding damaging the flexible sheet 62 when the flexible sheet 62 is stretched beyond the tension value of the tension threshold value. The two fixing regions 622 of the flexible sheet 62 can be moved by the same amount of displacement, so that the attaching object 200 adhered to the bonding region 621 can be adhered onto the attached object 300 without a position offset for achieving a precisely attaching effect.

Moreover, the coefficient of elasticity of the bonding film 62b in the flexible sheet 6 is less than that of the bottom film 62a, so that when the bottom film 62a is stretched and deformed, the attaching object 200 adhered to the bonding film 62b can be less affected by the stretched bottom film 62a for effectively increasing the stability and accuracy of the attaching process.

### [Second Embodiment]

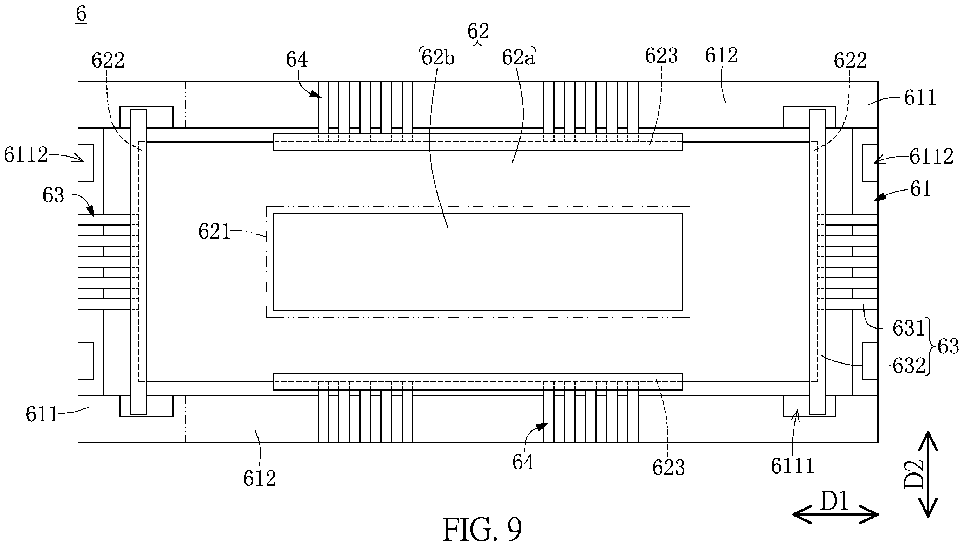

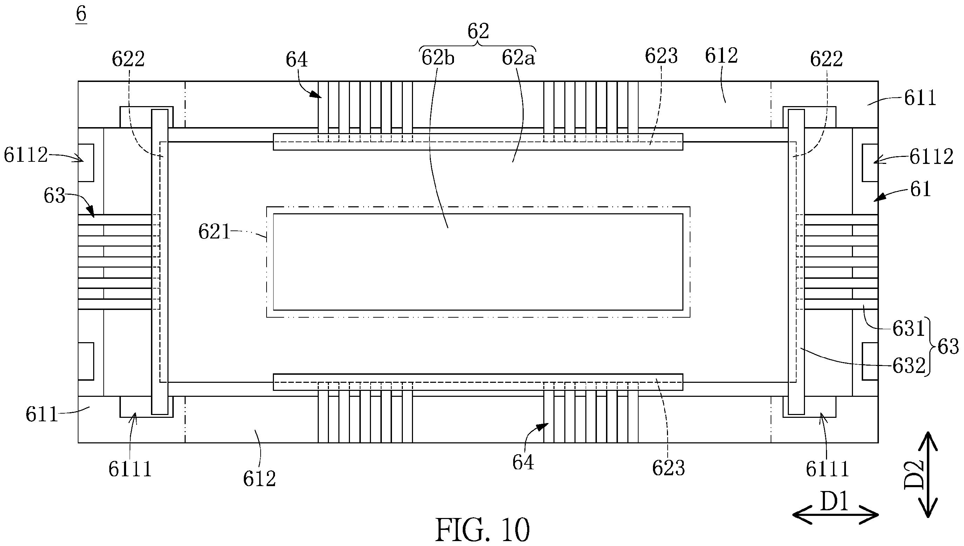

Referring to FIG. 9 and FIG. 10, a second embodiment of the present disclosure is similar to the first embodiment of the present disclosure. For the sake of brevity, descriptions of the same components in the first and second embodiments of the present disclosure will be omitted herein, and the following description only discloses different features between the first and second embodiments.

In the present embodiment, the flexible sheet 62 includes two auxiliary fixing regions 623 respectively located at another two opposite sides of the bonding region 621, and the two auxiliary fixing regions 623 are spaced apart from each other along a second direction D2 perpendicular to the first direction D1. Moreover, the curved-surface attaching intermediary 6 further includes two auxiliary buffering assemblies 64 assembled to the frame 61 (e.g., the two long lateral portions 612), and the two auxiliary fixing regions 623 are respectively fixed to the two auxiliary buffering assemblies 64. Specifically, the structure and operation of any one of the two auxiliary buffering assemblies 64 are similar to those of the buffering assembly 63 and are not described in the present embodiment for the sake of brevity.

Accordingly, when the flexible sheet 62 is compressed to increase the tension value thereof to reach the predetermined starting value, the two fixing regions 622 are moved toward the bonding region 621 by a same amount of displacement through the two buffering assemblies 63, and the two auxiliary fixing regions 623 are moved toward the bonding region 621 by a same amount of displacement through the two auxiliary buffering assemblies 64.

### [Beneficial Effects of the Embodiments]

In conclusion, in the curved-surface attaching intermediary of the attaching device of the present disclosure, any one of the two fixing regions of the flexible sheet can be moved by the amount of displacement, thereby avoiding damaging the flexible sheet when the flexible sheet is stretched beyond the tension value of the tension threshold value. The two fixing regions of the flexible sheet can be moved by the same amount of displacement, so that the attaching object adhered to the bonding region can be adhered onto the attached object without a position offset for achieving a precisely attaching effect.

Moreover, in the curved-surface attaching intermediary of the attaching device of the present disclosure, the coefficient of elasticity of the bonding film in the flexible sheet is less than that of the bottom film, so that when the bottom film is stretched and deformed, the attaching object adhered to the bonding film can be less affected by the stretched bottom film for effectively increasing the stability and accuracy of the attaching process.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its scope.

## Claims

1. An attaching device (100), **characterized by** comprising:
a carrying mechanism (1) including a carrying surface (123) configured to hold an attached object (300);
a pressing mechanism (2) corresponding in position to the carrying mechanism (1), wherein the pressing mechanism (2) has a filled space (23), a filling opening (24) being in spatial communication with the filled space (23), and a pressing member (22) that defines at least part of the filled space (23), and wherein the pressing mechanism (2) and the carrying mechanism (1) are movable relative to each other, and the pressing mechanism (2) is configured to fill a fluid into the filled space (23) through the filling opening (24), so that the filled space (23) expands to deform the pressing member (22); and
a curved-surface attaching intermediary (6) selectively disposed between the carrying surface (123) and the pressing member (22), wherein the curved-surface attaching intermediary (6) includes:
a frame (61);
two buffering assemblies (63) movably assembled to the frame (61); and
a flexible sheet (62) including a bonding region (621) and two fixing regions (622) that are respectively located at two opposite sides of the bonding region (621), wherein the bonding region (621) faces toward the carrying surface (123) and is configured to adhere with an attaching object (200), and the two fixing regions (622) are respectively fixed to the two buffering assemblies (63);
wherein, when the attaching device (100) is operated to implement an attaching process after the attached object (300) is held by the carrying surface (123) and the attaching object (200) is adhered to the flexible sheet (62), a curved surface (301) of the attached object (300) and the pressing member (22) that is deformed by the filled space (23) jointly clamp and press against the flexible sheet (62) and the attaching object (200), so that the attaching object (200) is deformed and adhered onto the curved surface (301) of the attached object (300), and wherein, when the flexible sheet (62) is compressed to increase a tension value thereof to reach a predetermined starting value, the two fixing regions (622) are moved toward the bonding region (621) by a same amount of displacement through the two buffering assemblies (63).

2. The attaching device (100) according to claim 1, wherein, in the attaching process, the pressing mechanism (2) is configured to gradually expand the filled space (23) toward the flexible sheet (62) to allow the pressing member (22) to gradually press against the flexible sheet (62), so as to gradually deform the flexible sheet (62) toward the carrying surface (123) to deform and adhere the attaching object (200) onto the curved surface (301) of the attached object (300).

3. The attaching device (100) according to claim 1, wherein, in the attaching process, the carrying mechanism (1) is configured to allow the attached object (300) held by the carrying surface (123) to move toward and abut against the flexible sheet (62) so that the attaching object (200) and the flexible sheet (62) gradually press against the pressing member (22) that is deformed by the filled space (23), so as to deform and adhere the attaching object (200) onto the curved surface (301) of the attached object (300).

4. The attaching device (100) according to claim 1, wherein the pressing mechanism (2) and the carrying mechanism (1) are movable relative to each other between a sealed position and an open position, wherein the attaching device (100) further includes a suction mechanism (5) connected to at least one of the pressing mechanism (2) and the carrying mechanism (1), and wherein, when the pressing mechanism (2) and the carrying mechanism (1) are at the sealed position, the pressing mechanism (2) and the carrying mechanism (1) surroundingly form a work space (P), and the suction mechanism (5) is configured to suction away air in the work space (P) so as to allow the work space (P) to be in a vacuum state.

5. The attaching device (100) according to claim 4, further comprising a transferring mechanism (4) disposed outside of the pressing mechanism (2) and the carrying mechanism (1), and wherein, when the pressing mechanism (2) and the carrying mechanism (1) are at the open position, the transferring mechanism (4) is configured to hold and transfer the curved-surface attaching intermediary (6) so as to allow the curved-surface attaching intermediary (6) to be located between or outside of the pressing member (22) and the carrying surface (123).

6. The attaching device (100) according to claim 1, wherein the flexible sheet (62) includes a bottom film (62a) and a bonding film (62b), the two fixing regions (622) are arranged on the bottom film (62a), the bonding region (621) is arranged on the bonding film (62b), and a coefficient of elasticity of the bonding film (62b) is less than a coefficient of elasticity of of the bottom film (62a), and wherein the predetermined starting value is less than a tension threshold value where the bottom film (62a) ruptures or is elastically fatigued.

7. The attaching device (100) according to claim 1, wherein any one of the two buffering assemblies (63) includes an elastic member (631) and a positioning member (632) that is movably disposed on the frame (61), and the two fixing regions (622) are respectively fixed to the positioning members (632) of the two buffering assemblies (63), and wherein in the any one of the two buffering assemblies (63), the elastic member (631) is fixed to the frame (61) and the positioning member (632), so that the positioning member (632) is elastically movable relative to the frame (61) through the elastic member (631).

8. The attaching device (100) according to claim 7, wherein the frame (61) has a plurality of guiding rails (6111), and the positioning members (632) of the two buffering assemblies (63) are movably disposed on the guiding rails (6111), and wherein, when the flexible sheet (62) is compressed to increase the tension value thereof to reach the predetermined starting value, each of the positioning members (632) of the two buffering assemblies (63) are moved along the guiding rails (6111) relative to the frame (61) by the same amount of displacement.

9. The attaching device (100) according to claim 1, wherein the bonding region (621) is spaced apart from each of the two buffering assemblies (63) by a same distance, and the two fixing regions (622) are spaced apart from each other along a first direction (D1), wherein the flexible sheet (62) includes two auxiliary fixing regions (623) respectively located at another two opposite sides of the bonding region (621), and the two auxiliary fixing regions (623) are spaced apart from each other along a second direction (D2) perpendicular to the first direction (D1), wherein the curved-surface attaching intermediary (6) further includes two auxiliary buffering assemblies (64) assembled to the frame (61), and the two auxiliary fixing regions (623) are respectively fixed to the two auxiliary buffering assemblies (64), and wherein, when the flexible sheet (62) is compressed to increase the tension value thereof to reach the predetermined starting value, the two auxiliary fixing regions (623) are moved toward the bonding region (621) by a same amount of displacement through the two auxiliary buffering assemblies (64).

10. A curved-surface attaching intermediary (6), **characterized by** comprising:
a frame (61);
two buffering assemblies (63) movably assembled to the frame (61); and
a flexible sheet (62) including a bonding region (621) and two fixing regions (622) that are respectively located at two opposite sides of the bonding region (621), wherein the bonding region (621) is configured to adhere with an attaching object (200), and the two fixing regions (622) are respectively fixed to the two buffering assemblies (63);
wherein, when the flexible sheet (62) is compressed to increase a tension value thereof to reach a predetermined starting value, the two fixing regions (622) are moved toward the bonding region (621) by a same amount of displacement through the two buffering assemblies (63).

11. The curved-surface attaching intermediary (6) according to claim 10, wherein the bonding region (621) is spaced apart from each of the two buffering assemblies (63) by a same distance.

12. The curved-surface attaching intermediary (6) according to claim 10, wherein the flexible sheet (62) includes a bottom film (62a) and a bonding film (62b), the two fixing regions (622) are arranged on the bottom film (62a), the bonding region (621) is arranged on the bonding film (62b), and a coefficient of elasticity of the bonding film (62b) is less than a coefficient of elasticity of of the bottom film (62a), and wherein the predetermined starting value is less than a tension threshold value where the bottom film (62a) ruptures or is elastically fatigued.

13. The curved-surface attaching intermediary (6) according to claim 10, wherein any one of the two buffering assemblies (63) includes an elastic member (631) and a positioning member (632) that is movably disposed on the frame (61), and the two fixing regions (622) are respectively fixed to the positioning members (632) of the two buffering assemblies (63), and wherein in any one of the two buffering assemblies (63), the elastic member (631) is fixed to the frame (61) and the positioning member (632), so that the positioning member (632) is elastically movable relative to the frame (61) through the elastic member (631).

14. The curved-surface attaching intermediary (6) according to claim 13, wherein the frame (61) has a plurality of guiding rails (6111), and the positioning members (632) of the two buffering assemblies (63) are movably disposed on the guiding rails (6111), and wherein, when the flexible sheet (62) is compressed to increase the tension value thereof to reach the predetermined starting value, the positioning members (632) of the two buffering assemblies (63) are moved along the guiding rails (6111) relative to the frame (61) by the same amount of displacement.

15. The curved-surface attaching intermediary (6) according to claim 10, wherein the two fixing regions (622) are spaced apart from each other along a first direction (D1), the flexible sheet (62) includes two auxiliary fixing regions (623) respectively located at another two opposite sides of the bonding region (621), and the two auxiliary fixing regions (623) are spaced apart from each other along a second direction (D2) perpendicular to the first direction (D1), wherein the curved-surface attaching intermediary (6) includes two auxiliary buffering assemblies (64) assembled to the frame (61), and the two auxiliary fixing regions (623) are respectively fixed to the two auxiliary buffering assemblies (64), and wherein, when the flexible sheet (62) is compressed to increase the tension value thereof to reach the predetermined starting value, the two auxiliary fixing regions (623) are moved toward the bonding region (621) by the same amount of displacement through the two auxiliary buffering assemblies (64).
